(19) Europäisches Patentamt
European Patent Office
Office européen des brevets

(11) **EP 4 550 354 A1**

(12) **EUROPEAN PATENT APPLICATION**

(43) Date of publication:
**07.05.2025 Bulletin 2025/19**

(21) Application number: **23207270.2**

(22) Date of filing: **01.11.2023**

(51) International Patent Classification (IPC):
*G16Y 40/40* (2020.01)    *G06Q 10/08* (2024.01)
*G06Q 10/20* (2023.01)    *G06Q 10/30* (2023.01)
*H04L 9/32* (2006.01)    *H04L 9/00* (2022.01)

(52) Cooperative Patent Classification (CPC):
**G16Y 40/40; G06Q 10/0631; G06Q 10/20;
G06Q 10/30; G06Q 30/018; H04L 9/3239;
H04L 9/3247; H04L 9/50**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Axis AB
223 69 Lund (SE)**

(72) Inventors:
• **Danielsson Fan, Xing
223 69 Lund (SE)**

• **Hallgren, Morgan
223 69 Lund (SE)**
• **Sernevi, Christoffer
223 69 Lund (SE)**

(74) Representative: **AWA Sweden AB
Box 5117
200 71 Malmö (SE)**

Remarks:
Amended claims in accordance with Rule 137(2)
EPC.

(54) **A TAMPER-PROTECTED EVENT STREAM**

(57)    A method of providing a signed event stream (100), which is an append-only sequence of immutable items, comprises:

obtaining a sequence of items (no), where each item is compliant with a format that includes at least a product field (114) for containing an identifier of a technical product in which an event has occurred, a reason field for containing an identifier of a reason associated with the event, an index field (112) for containing an index of the event, and a data field (118);

dividing (204) the sequence into chunks (120), wherein each chunk includes one or more items; and

for each chunk, appending (206) an item (110*) compliant with the format, wherein the data field of the item contains a digital signature (s(H1), s(H2)) of the chunk, for thereby allowing verification that the sequence is an authentic event stream.

Fig. 1B

EP 4 550 354 A1

**Description**

**TECHNICAL FIELD**

The present disclosure relates to the technical field of safe digital communication and storage, and in particular proposes methods and devices for providing and/or processing an append-only sequence of immutable items. Such sequences find widespread use in computer systems with event-sourcing architectures. The sequences may be used to represent so-called event streams for purposes of management and maintenance of technical products.

**BACKGROUND**

In the context of computer systems and computing, *event sourcing* may be described as an architectural paradigm or design paradigm where data is stored in an append-only log, an *event stream.* The event stream may be utilized as a vehicle for safe communication and/or for safe storage of data that represents *events* in a physical or nonphysical technical product. An event may for example refer to a configuration or maintenance action applied to the technical product, a change of use of the technical product, an accident or internal error which affects the technical product or the like. The event may be described in terms of value assigned to a product field, a reason field, an index field and/or a data field.

The data contained in an event stream with these characteristics allows a recipient to follow how the internal state of the technical product evolves over time, or to reconstruct how the state has evolved starting from a known initial state. In particular, the recipient may use the sequence of events which have occurred in the technical product to derive the current state of the technical product from a known initial state. The recipient may do so by applying the events to the initial state in the right sequence, possibly with reference to a pre-agreed model of the technical product and with the aid of a computer simulation. Because of the append-only property of the event stream, which makes tampering and similar unauthorized changes discoverable, the recipient may trust the data in the event stream even if it has been transmitted over a potentially unsafe data connection.

In addition to safe communication, event streams maybe used for storage. Potential users are entities (organizations, persons, automated agents etc.) entrusted with the management or maintenance of a technical product. The event-stream format makes it possible to store - for the entity's own later use - event-related data that the management or maintenance generates or relies on in the form of an event stream. Whether or not the entity has used a trusted repository for the physical storage of the event-related data, the entity will be able to trust the retrieved data fully thanks to the append-only property.

In the field of event sourcing, many implementation aspects are entrusted to technology providers. It is left up to the technology providers to develop solutions that achieve functionally specified behaviors, such as the append-only property, and some of these solutions are described in the state of the art.

For example, it is proposed in US20230140623A1 to use a blockchain for event sourcing of a computing object. More precisely, a processing server is described which receives state data for the computing object and an identification value associated with the computing object, applies a one-way cryptographic function to the received state data to generate a hash value, and publishes the generated hash value and the identification value on a blockchain. The blockchain may be designed for validation by a proof-of-work technique. On a recipient side, a further processing server receives the state data for the computing object and the identification value associated with the computing object, applies a one-way cryptographic function to the received state data to generate a comparison hash value, identifies the published hash value stored in the blockchain with the identification value, and verifies a state of the computing object according to the state data based on a match of the generated comparison hash value with the identified published hash value.

Because blockchains are highly complex technology, which is known to have poor energy efficiency, it would be desirable to implement event streams by alternative means.

**SUMMARY**

One objective of the present disclosure is to propose methods and devices for providing a safe event stream. The event stream thus provided shall be safe in the sense of being tamper-protected, tamper-proof, tamper-resistant or tamper-evident. A particular objective is to provide an authenticable event stream which is backward compatible (e.g., with respect to an event-processing application). Another particular objective is to provide an authenticable event stream which, in the view of a third party or of a legacy event-processing application, differs unnoticeably from a conventional event stream. A further objective of the present disclosure is to propose methods and devices for processing an authenticable event stream. A still further objective is to provide a computer program for these purposes.

At least some of these objectives are achieved by the invention as defined by the independent claims. The dependent claims relate to advantageous embodiments.

In a first aspect of the present disclosure, there is provided a method of providing a signed event stream, which is an append-only sequence of immutable items. The method comprises: obtaining a sequence of items where each item is compliant with a format that includes at least a product field for containing an identifier of a technical product in which an event has occurred, a reason field for containing an identifier of a reason associated with the event, an index field for containing an index of the event, and a data field; dividing the sequence into chunks, wherein each chunk includes one or more items; and, for each chunk, appending an item compliant with the format, wherein the data field of the item contains a digital signature of the chunk, for thereby allowing verification that the sequence is an authentic event stream.

Because the digital signature is carried in the data field of the appended item, a verification of the authenticity of this chunk of the event stream becomes possible without violating the format. This is advantageous from the point of view of backward compatibility, as the signing does not introduce any non-legacy structures in the sequence. A further potential advantage is that third parties (i.e., not intended recipients) ignore whether the event stream is signed or not, and they cannot figure out the modalities that have been used for such signing. It is understood that a digital signature can normally be represented as a bit pattern that is indistinguishable from the data-field content in the preexisting items that represent events, whereby the appended item as a whole is indistinguishable from the preexisting items.

In representative use cases, the verification is carried out by a recipient of the event stream who may be, for example, the same user who provided the event stream and retrieves it at a later point in time, or another party to whom the user has transmitted the event stream. If the digital signatures are missing and/or the verification is unsuccessful for one or more chunks (e.g., the digital signature does not correspond to the content of the items of the chunk), the event stream is not authentic and should more correctly be described as a sequence of items. This may suggest that the event stream has been tampered with.

In the terminology of the present disclosure, an "append-only sequence" is a sequence which can be extended only at a designated one of its ends, the more recently created end. For example, the append-only sequence may be associated with a mechanism that prevents insertion of new items before any existing item. An append-only sequence may equivalently be described as a sequential ledger.

In the terminology of the present disclosure, further, an item is "immutable" if the item cannot be modified after being created, e.g., adding or removing fields to an item, or assigning different values to the fields.

In some embodiments of the first aspect, it is made sure that those items which contain digital signatures satisfy a predefined recognition criterion. Assigning suitable values to one or more fields of an item (other than the data field) may be sufficient to make the item satisfy such a recognition criterion. The recognition criterion may relate to one field at a time (e.g., a predefined value or a predefined value range) or it may relate to multiple fields (e.g., a predefined combination of values of the fields, or a predefined result of an arithmetic operation on the fields). A recognition criterion relating to multiple fields may be relatively more difficult for a third party to figure out. At the recipient end, the items containing digital signatures may be identified by evaluating the recognition criterion and checking the outcome for different items, so that the identified items and the remaining items may be processed differently.

In some embodiments, the event stream is associated with a predefined model of each technical product to which it relates, i.e., all such technical products for which events are to be recorded using the event stream. The model may for example include a plurality of state variables of the technical product. In these embodiments, each item in the sequence that represents an event shall indicate - or exhaustively indicate - all changes to the state variables in the model that the event has caused. This allows the recipient of the event stream to reconstruct the current state of the technical product and/or to simulate the evolution of states over time. In particular, an event-processing application on the recipient side may reconstruct a current state of the technical product based on said predefined model together with the indicated changes to the state variables caused by the events corresponding to consecutive items in the sequence.

In a second aspect of the present disclosure, there is provided a method for processing a signed event stream. The method carries out a verification that a sequence is an append-only sequence of immutable items, in other words, an authentic event stream. The method comprises: receiving a sequence of items where each item is compliant with a format that includes at least a product field for containing an identifier of a technical product in which an event has occurred, a reason field for containing an identifier of a reason associated with the event, an index field for containing an index of the event, and a data field; extracting items in which the data fields contain digital signatures of respective chunks of the sequence; verifying, using the digital signatures, that the sequence is an authentic event stream; and feeding the sequence without the extracted items to an event-processing application.

The method according to the second aspect includes steps of verifying the authenticity of the signed event by means of the digital signature. Because the items in which the data fields contain digital signatures of respective chunks of the sequence are extracted, the event-processing application further downstream need not be adapted to the novel signing arrangements proposed in this disclosure; this allows continued use of legacy software and/or legacy components. A further benefit of the method according to the second aspect may be that it does not presuppose any use of dedicated storage or dedicated communication channels for the signed event stream; rather, legacy solutions can be kept in operation.

In further aspects of the present disclosure, devices with processing circuitry arranged to perform one or more of the above-outlined methods are proposed.

The disclosure further extends to a computer program containing instructions for causing a computer to carry out one or more of these methods. The computer program may be stored or distributed on a data carrier. As used herein, a "data carrier" may be a transitory data carrier, such as modulated electromagnetic or optical waves, or a non-transitory data carrier. Non-transitory data carriers include volatile and non-volatile memories, such as permanent and non-permanent storage media of magnetic, optical or solid-state type. Still within the scope of "data carrier", such memories may be fixedly mounted or portable.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order described, unless this is explicitly stated.

## BRIEF DESCRIPTION OF THE DRAWINGS

Aspects and embodiments are now described, by way of example, with reference to the accompanying drawings, on which:

figure 1A shows a sequence of items which are compliant with a uniform format suitable for storing information relating to an event which has occurred in a technical product;

figure 1B shows the sequence from figure 1A after appending signature-carrying items according to a first embodiment;

figure 1C shows the sequence from figure 1A after appending signature-carrying items according to a second embodiment;

figure 2 is a flowchart of a method of providing a signed event stream, according to embodiments herein;

figure 3 is a flowchart of a method of processing a signed event stream, according to embodiments herein;

figure 4A illustrates a process of validating the authenticity of an event stream by means of digital signatures, according to a first embodiment;

figure 4B illustrates a process of validating the authenticity of an event stream by means of digital signatures, according to a second embodiment; and

figure 5 is a block diagram of a device suitable for carrying out the method of figure 2 or 3.

## DETAILED DESCRIPTION

The aspects of the present disclosure will now be described more fully hereinafter with reference to the accompanying drawings, on which certain embodiments of the invention are shown. These aspects may, however, be embodied in many different forms and should not be construed as limiting; rather, these embodiments are provided by way of example so that this disclosure will be thorough and complete, and to fully convey the scope of all aspects of the invention to those skilled in the art. Like numbers refer to like elements throughout the description.

### System overview

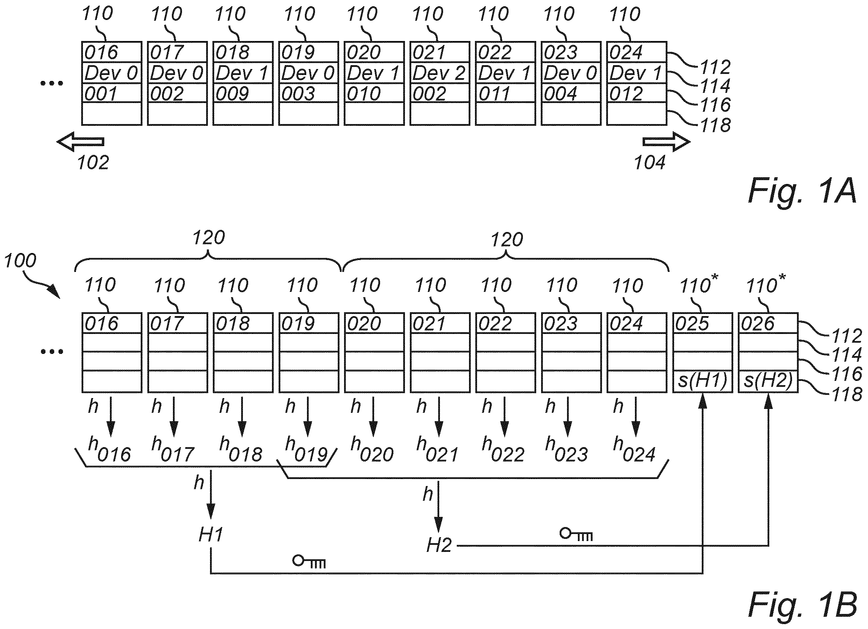

Figure 1A shows a sequence of items 110, in which each item 110 is compliant with a format. The sequence extends from a less recently obtained (e.g., less recently created, less recently received) end 102 towards a relatively more recently obtained end 104. This is also reflected by the values of the global index field 112. Each item 110 is an independent data structure, in the sense that it can be read/decoded separately from other items 110 in the sequence. Further, an item 110 can be removed from or added to the sequence nondestructively and without having to read/decode any other item 110 in the sequence. (This statement about the items 110 refer to an a priori condition of the sequence. It is understood that the present disclosure aims to propose measures for protecting the sequence from unauthorized removal or adding of items 110.)

The items 100 comply with a format which includes at least the following fields, to which values are assigned when the item is created (instantiated):

- a product field 114 for containing an identifier of a technical product in which an event has occurred, such as Dev_0, Dev_1, $Dev_2$;

- a reason field (not shown) for containing an identifier of a reason associated with the event;

- index fields 112, 116, which each are suitable for containing an index of the event; and

- a data field 118.

The format of the items may include one or more additional fields, such as an event-type field (not shown), an event-class field (not shown), a timestamp or the like. It is understood that each item 110 is immutable in the sense that its fields 112, 114, 116, 118 retain the values they were assigned at the moment of creation (instantiation), and that no field can be added or removed at a later point in time. The sequence is such that new items 110 can be appended at the recent end 104 only; attempts to insert items 110 at other positions are either to be blocked proactively, or undone reactively, or the attempts shall be discoverable (evident) so that a recipient can take suitable action. A sequence of items 110 fulfilling these properties may be described as an authentic event stream, and it is one of the purposes of the signing arrangements proposed herein to verify this.

Each technical product (or work entity) may be a hardware product or a software product. A software product may for example be a copy of a computer program product which has been installed on a particular machine and is being maintained/managed by an entity (organization, person, automated agent). The event stream may relate to a plurality of technical products, such as a fleet of hardware products or software products. Optionally, each technical product Dev_0, Dev_1, Dev_2 to which the event stream relates has a respective model M0, M1, M2, which may be configured to be suitable for supporting a simulation of a state of the product. The model may for example include a plurality of state variables of the technical product, representing installed equipment, software version, operating parameters, battery charging level, failures, service history and the like. It may be assumed that the model M0, M1, M2 is available to both the sender and the recipient of the event stream.

As mentioned initially, the recipient may use the sequence of events which have occurred in the technical product to derive the current state of the technical product from a known initial state. An "initial state" in this sense may be the state of the technical product before any of the events documented in the event stream had occurred. Alternatively, the "initial state" may be a state which is indicated explicitly (e.g., in terms of values of the state variables) for a point located a nonzero number of items from the beginning of the event stream. In such a situation, the recipient can derive the current state simply by applying the events that have occurred after said point to the explicitly indicated state; the earlier events need not be considered.

As used herein "events" in a technical product may include events taking place within the product, adjacent to the product, in the product's environment, in respect of the product etc., such as: deploying/purchasing/initializing/onboarding a new technical product, adding a product to a fleet, decommissioning a product, upgrading the hardware of a product, adding a peripheral or other hardware equipment to the product, repairing the product, performing diagnostics on the product (e.g., virus scan, in-device diagnostics, external examination), upgrading the software of the product to a next version, adding a root user of the product.

The content of the reason field may, generally speaking, indicate a condition or occurrence that triggered the recorded event in the technical device. The reason may itself be an event, e.g., when the onboarding of a new hardware device triggers an upgrade to a more recent version of operating system software.

The product field 114 may contain an identifier of a technical product, such as a serial number assigned by a manufacturer, an enterprise-internal identifier assigned by an owner of the product, a device identifier in a network namespace (e.g., Media Access Control address, MAC address), a user identifier assigned by a network operator (e.g., International Mobile Subscriber Identifier, IMSI).

In the example of figure 1A, the upper index field 112 contains a global index of the event, in the form of a symbol from a global sequence covering all the items 110. On the one hand, the global index may be used for identifying or referencing the item or the event to which it relates. On the other hand, a simple check that the global indices form an uninterrupted sequence may be sufficient for verifying that no item 110 is missing and none has been added. The lower index field 116 may be used as a local index, such that a separate sequence is used for each of the technical products Dev_0, Dev_1, Dev_2, .... The lower index field 116, which is optional and thus not part of all embodiments disclosed herein, is assumed to be unique among items relating to the same device, but may not be globally unique among all items. This is illustrated in figure 1A by the repetition of the value 002, for products Dev_0 and Dev_2, in the lower index field 116. The lower index field 116 may be used to verify that no item 110 for a particular device is missing and none has been added. It is noted that the global and local indices may be provided as sequence numbers, respectively.

The data field 118 may be used for describing particulars of the event which has occurred in the technical product, or for describing an outcome of the event. For example, the data field 118 may store information indicating that an Internet Protocol (IP) address of the technical product has been set to a certain value, that the technical product has been configured with a certain time zone, that a virus scan on the technical product resulted in no findings. In the specific case where the event stream is associated with a model M0, M1, M2 for each technical product, the data field 118 may contain an exhaustive indication of all changes to the state variables that the event has caused. The data field 118 may be an unrestricted field, such as a binary sequence or alphanumeric string, intended to convey information from a sending party and a recipient of the event stream, or from an entity which stores the event stream to the same entity which retrieves the event stream at a later point in time. Therefore, the data field 118 need not be intelligible to other entities, including communication and storage equipment which handle a physical representation of the event stream, and including entities that are entrusted with signing the event stream or verifying its authenticity. The inventors have realized that the data field 118 can be utilized as a suitable container for a digital signature of a chunk of items, as will be described in more detail below.

## Signing method

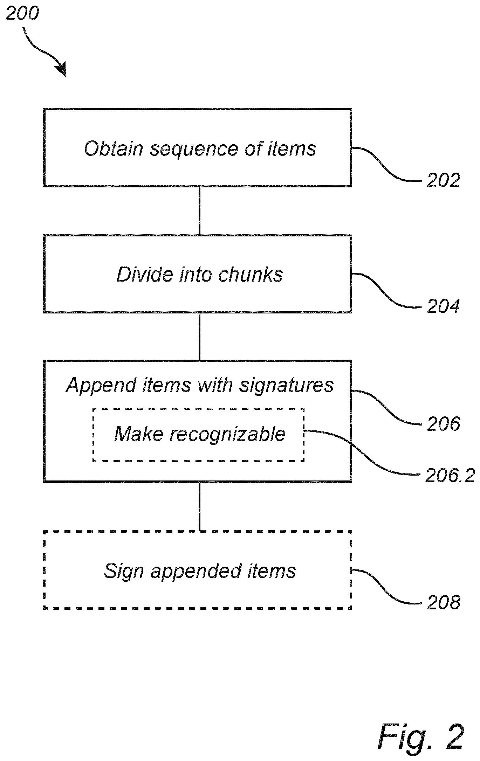

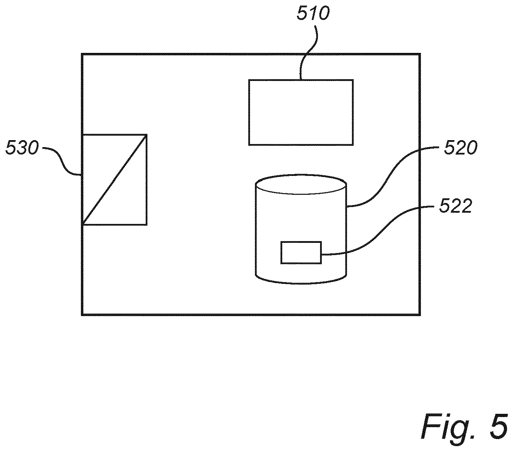

Turning now to figure 2, there will be described a method 200 of providing a signed event stream 100, which is an append-only sequence of immutable items. The input to the method 200 includes a sequence of items 110 compliant with a predefined format, as exemplified above with reference to figure 1A. The method 200 may be executed by at least one processor or computer under the control of the same entity as created the sequence of items 110 (unsigned event stream), or by an entity with a dedicated responsibility for signing said sequence of items 110. A suitable device for this purpose is illustrated in figure 5. The device comprises processing circuitry 510, a memory (non-transitory data carrier) 520 and an input/output interface 530. The memory 520 may be used for storing a computer program 522 with instructions to be executed by the processing circuitry 510. The output/input interface 530, which may be of a wired or wireless type, may be used for exchanging signed or unsigned event streams with other devices or software processes.

In a first step 202 of the method 200, a sequence of items 110 is obtained. The items 110 shall be compliant with a predefined format, which includes the fields that were reviewed above with reference to figure 1A. The sequence of items 110 may be obtained by being received from a communication party, fetched from a storage location, generated from input data etc. Further, the sequence of items 110 may be received gradually, so that the execution of the first step 202 continues, optionally to overlap in time with the subsequent steps of the method 200. In other words, the method 200 may be executed during the obtention 202 of the sequence of items 110; when the method 200 is executed in this way, generally speaking, items are processed starting from the less recently obtained end 102 of the sequence and towards the relatively more recently obtained end 104 (see figure 1A).

In a second step 204, the sequence is divided into chunks 120. Each chunk 120 may include one or more items 110. The items 110 of a chunk 120 may form an uninterrupted subsequence within the obtained sequence, or they may have arbitrary positions in the sequence. The chunks 120 may be disjoint, as shown in the example of figure 1B, or they may have a nonzero overlap. The dividing of the sequence into chunks 120 in step 204 may follow a static rule or may be based on a dynamic criterion, e.g. their timestamps must not exceed a predefined duration, or their total data volume must be within predefined bounds. For example, the division into chunks 120 maybe such that all events that occur on one calendar day shall stay within one chunk. The static rule or dynamic criterion may be shared with a recipient, to allow the recipient to reconstruct the composition of the chunks 120 without access to explicit information. Specifically, a pre-agreed rule by which the timestamps must not exceed a predefined duration could allow the recipient to discover that an unauthorized party has removed an expected signature-containing item 110* for a certain period (e.g., one day), indeed since this item 110* should have constituted a chunk 120 of its own regardless of whether any real events occurred in the period.

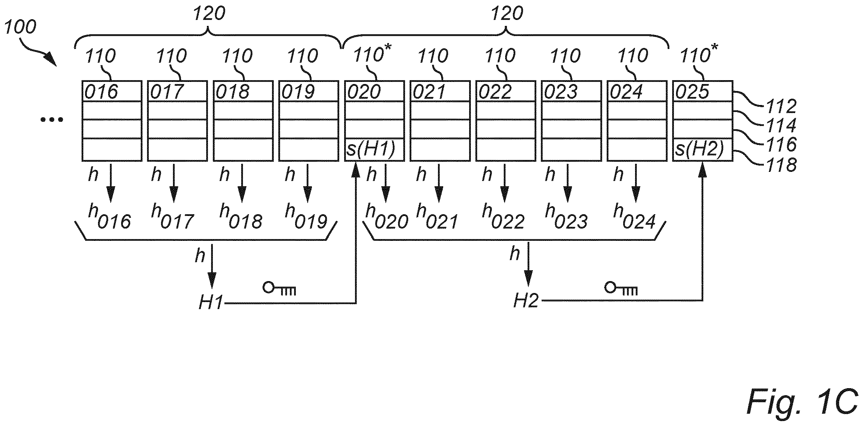

If the chunks 120 overlap, the digital signature of one chunk 120 is inherently linked to the digital signature of the next chunk 120. Also if the chunks 120 do not overlap, the digital signature of one chunk 120 can be linked to the digital signature of a subsequent chunk 120 (one or more chunks away). In figure 1B, such linking is achieved by letting the later chunk's signature s(H2) depend also on a hash H019 from the earlier chunk, namely, through the super-hash H2. Figure 1C shows an alternative where linking is achieved by storing the earlier chunk's signature s(H1) in an item 110 that belongs to the later chunk. The linking of the digital signatures makes it harder for an unauthorized party to insert or remove items 110 unnoticed. The linking of the digital signatures also allows a verification of the append-only property of the event stream.

In a third step 206 of the method 200, an item 110* containing a digital signature is appended to the sequence for each chunk 120. More precisely, the appended item 110* shall be compliant with the above-discussed format and the digital signature shall be contained in the data field 118 of the format. Preferably, the digital signature is carried in a new item 110* generated (instantiated) for this purpose; the digital signature is not to be added to an existing item 110 in the sequence (which would be contrary to the immutability of that item 110). Further preferably, each appended item 110* shall be independent from the other items 110, 110* in the sequence in the sense explained above. By appending the items 110* with digital signatures, it will be possible to verify that the sequence is an authentic event stream, i.e., that the sequence is an append-only sequence of immutable items.

Figure 1B illustrates a pattern for appending the signature-containing items 110* suitable for use with a first embodiment, where the method is executed on a complete sequence of items 110. The pattern in figure 1C is possible when the method 200 is executed during the obtention 202 of the sequence (second embodiment), wherein later chunks 120 may be added after the signature-containing items 110*. For simplicity, the values of fields 114, 116 have not been drawn.

According to the first embodiment shown in figure 1B, a first digital signature s(H1) is generated as follows. A hash function h is used to compute hashes (or fingerprints) h016, h017, h018, h019 of the items 110 of a first chunk 120, and the hash function is applied to a concatenation or other combination of hashes h016, h017, h018, h019 to obtain a further hash $H1 = h([h016, h017, h018, h019])$. The further hash H1 may occasionally be referred to herein as a super-hash or a hash of hashes. The square-brackets notation $[\cdot]$ refers to a generic data combination operation, which may include concatenating the data linearly (juxtaposition) or in various staggered arrangements. The combination operation may further include an arithmetic operation on the data, such as bitwise OR, XOR, multiplication, division or a modulo operation. The first digital signature s(H1) is a digital signature of the super-hash $H_1$, particularly a cryptographic digital signature of the super-hash H1. It is stored in the data field 118 of the appended item 110*.

Optionally, the super-hash H1 is stored together with the first digital signature s(H1) in the data field 118 ('document approach').

Each one of the hashes h016, h017, h018, h019 may be a hash or a salted hash of the data contained in all fields of the item 110 or a portion of that data extracted according to a pre-agreed rule. The hashes may be generated by a hash function (or one-way function) $h$, which is a cryptographic function that provides a safety level considered adequate in view of the sensitivity of the event-related data to be signed and/or in view of the value that would be at stake if the event-related data was manipulated by an unauthorized party. The hashes may for example be 256 bits long, such as SHA-256. Two further examples are SHA3-512 and RSA-1024. The hash function shall be predefined (e.g., it shall be reproducible) so that the hashes can be regenerated when the recipient is going to verify the authenticity of the event stream. A salted hash may be a hash of a combination of the item 110 (or a portion of the data unit) and a cryptographic salt; the presence of the salt may stop an unauthorized party who has access to multiple hashes from guessing what hash function is being used. Potentially useful cryptographic salts include a value of an active internal counter, a random number, and a time and place of signing.

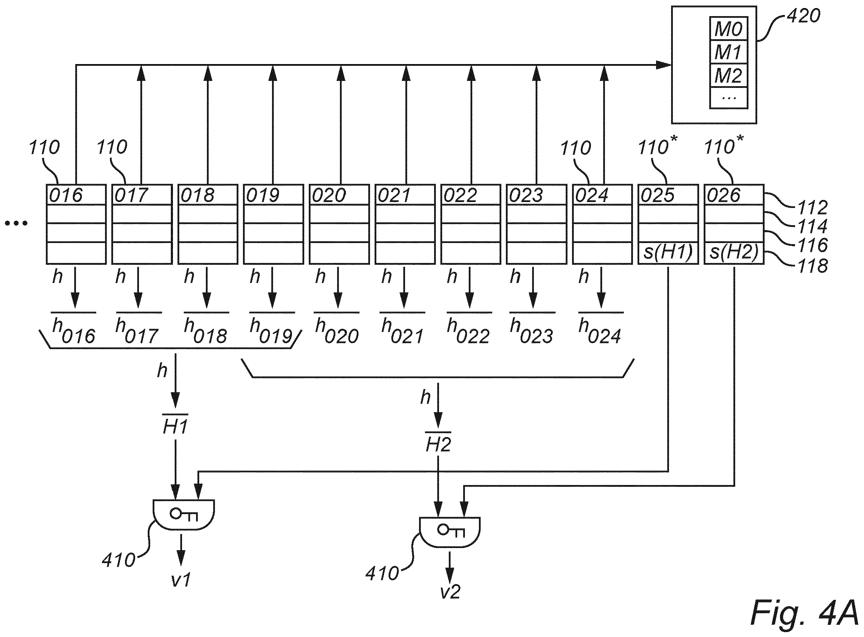

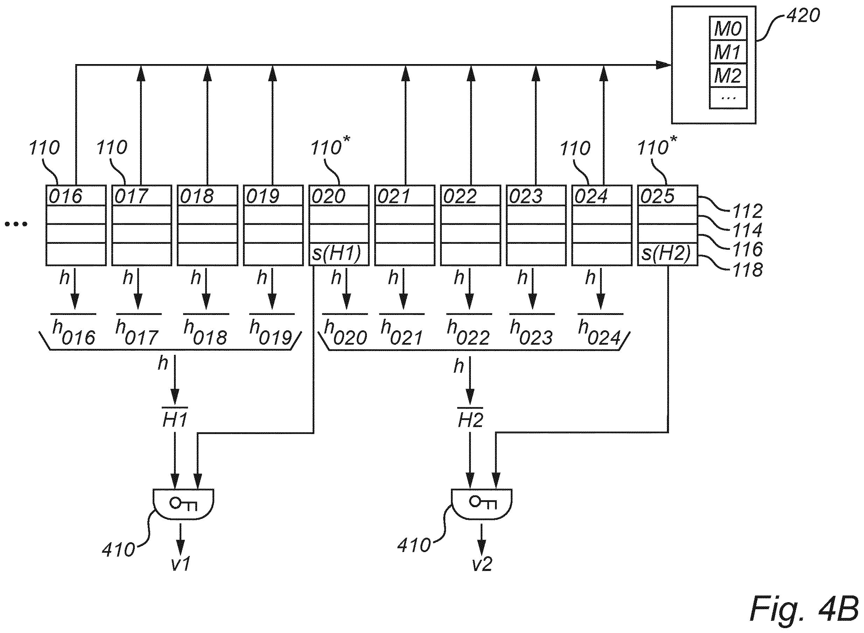

A cryptographic element with a pre-stored private key (four-pin key symbol) may be utilized to generate the digital signature s(H1) of the super-hash H1. The recipient of the signed event stream 100 may be supposed to hold a public key belonging to the same key pair; see element 410 (two-pin key symbol) in figures 4A and 4B. The public key enables the recipient to verify the authenticity of data associated with the digital signature s(H1) produced by the sender's cryptographic element but not to generate new signatures. The public key could also be included as metadata in the signed event stream, in which case there is no compelling need to store the public key at the recipient side. For example, the public key may be included as stream-level metadata at the beginning of each chunk 120, or a field (e.g., the data field or a portion thereof) of an item 110 in the chunk 120 may be assigned the value of a bitstring which represents the public key. In representative implementations, the size of the digital signature s(H1) varies as a function of the size of the signed chunk 120.

A (cryptographic) second digital signature s(H2) may be generated in an analogous way from hashes h020, h021, h022, h023, h024. Optionally, as shown in figure 1B, the hash h019 is included as well in computing the second super-hash, $H2 = h([h019, h020, h021, h022, h023, h024])$, so as to achieve a linking of the first and second digital signatures s(H1), s(H2). Such linking protects the signed event stream from unauthorized insertion, removal or reordering of entire chunks 120 and/or allows a verification of the append-only property. Equivalent linking can be achieved, for example, by letting the second super-hash H2 depend on the first super-hash H1, as follows: $H2 = h([H1, h020, h021, h022, h023, h024])$.

Because at least some of the signature-containing items 110* are not appended next to the chunk 120 concerned, corresponding guidance is provided to the recipient. A possible form of implicit guidance is to divide the sequence into chunks 120 according to a pre-agreed rule (e.g., static rule, dynamic criterion), is such that the recipient can reconstruct the composition of the chunks 120, and append the signature-containing items 110* in the same sequence as the chunks 120 themselves. Another option is to include in each signature-containing items 110* a position identifier which indicates the items 110 of the signed chunk 120. The position identifier can for example be accommodated in the data field 118 together with the digital signature. In such embodiments where the chunks 120 are uninterrupted subsequences within the sequence, it may be sufficient to identify the positions of the first and last item 110, or to include a position identifier of one of these together with the total number of items 110, or to include a position identifier of one of these on its own if all chunks 120 have an equal number of items 110. If a chunk 120 can comprise items 110 at arbitrary positions in the sequence, it may be necessary to use a position identifier which enumerates the items 110 in the signature-containing items 110*, e.g., in terms of their global indices (field 112).

According to the second embodiment illustrated in figure 1C, each signature-containing item 110* is appended immediately after the signed chunk 120. This placement allows the recipient of the signed event stream to easily determine the items 110 of the chunk 120; unlike the example in figure 1B. In practice, in many implementations, there is no need to provide any explicit guidance in this regard, e.g., by including a position identifier in the appended signature-containing item 110*. On the other hand, an implementer should make sure that the available processing resources and/or short-term storage (caching) resources are sufficient to generate and insert the signature-containing items 110* at the right positions even at times when the inflow of new items is significant. Occasional failures may be acceptable, but the probability of such failures should be controllable and preferably kept at a level that is acceptably low in view of the intended use case and the values at stake. It is understood that, when the method 200 is performed in a running fashion, while obtaining 202 the sequence gradually (e.g. as a live event stream), the embodiments where the signature-containing items 110* contain position identifiers may help reduce the need for redundant processing and/or caching capacity in the executing system.

With reference to figure 1C, a representative execution of the method 200 may start with the obtention 202 of the four items 110 with global indices 016, 017, 018, 019, which are identified as one chunk 120; then, by executing step 206, the sequence is extended with the signature-containing item 110* with global index 020; then, by a continued execution of steps 202 and 204, the sequence is extended with a further four items 110 that carry global indices 021, 022, 023, 024; and then, by executing step 206, the sequence is further extended by the appending of the signature-containing item 110* with global index 025.

Still with reference to figure 1C, it is seen that the first appended item 110* (global index 020, digital signature s(H1)) is included in the second chunk 120 of the sequence, so that it influences the second digital signature s(H2) in the second appended item 110* (global index 025). In general terms, it is an optional step 208 of the method 200 to cause the appended items 110* to be signed by including them in subsequent chunks 120 of the sequence. This also achieves a linking of the digital signatures, so as to protect the signed event stream from unauthorized insertion, removal or reordering of entire chunks 120, and/or from violation of the append-only property.

In the signing method 200, the third step 206 may optionally include a substep 206.2 of making a signature-containing item 110* satisfy a predefined recognition criterion. A purpose of the recognition criterion is to enable a recipient of the signed event stream to process the signature-containing items 110* and the remaining items 110 in different ways. In particular, the recipient may want to extract (or remove) the signature-containing items 110* to stop them from being input to an event-processing application 420 according to legacy technology.

One way of causing the signature-containing item 110* to satisfy a recognition criterion is to assign a value to a field of the item 110*, wherein said field is distinct from the data field 118, which is already being utilized for storing the digital signature. For example, the recognition criterion may be that the product field 114, the reason field or the event-type field has a predefined value or a value in a predefined value range. If for instance the product field 114 is used, the predefined value may be an identifier of an imaginary technical product that does not exist or is not part of a product fleet under consideration, such as Dev_10000 as opposed to identifiers in an expected numerical range Dev_0, Dev_1, Dev_2. Other embodiments may use the reason field to make the appended items 110* recognizable, which normally has values signifying "firmware-upgrade", "device discovered", "device discovered with IP 10.0.0.272" or similar events. Then, the recognition criterion may be that the reason field contains a value (in human-readable plaintext or as a code) signifying "signing". According to still further embodiments, where the event-type field is used in order to make the appended item 110* satisfy the recognition criterion, the existing items 110 may have event-type = "device event" while the signature-containing appended items 110* may have event-type = "signature event".

Another way of causing the signature-containing item 110* to satisfy a recognition criterion is to assign a value to a field, which is defined by the format but has been designated as 'reserved' or 'not used' by the entity that generates the event stream. Under these assumptions, as soon as said field in an item 110 contains any data at all, it will be evident that this item is a signature-containing item.

A still further way of making the signature-containing item 110* to satisfy a recognition criterion is to assign values to two or more fields of the item 110*. At least one of the fields is distinct from the data field 118. Then, the recipient can recognize the item as a signature-containing item 110* if the assigned values constitute a predefined combination of values, e.g., field_1 = value_1 and field_2 = value_2. Alternatively, the values are assigned in such manner that a predefined result is obtained when an arithmetic operation is performed on the fields, e.g., field_i + field_2 = result_1 when the arithmetic operation is addition. Further alternatively, the appended item 110* can satisfy the recognition criterion by the fact that the second field or a portion thereof repeats the cryptographic digital signature contained in the data field 118. For example, the appended item 110* can contain the assignment

$$\{\mathrm{data} = s(H_3), \mathrm{reason} = s(H_3)\}$$

or the assignment

$$\{\text{data} = s(H_3), \text{reason} = [\text{firmware-upgrade}, s(H_3)]\},$$

where $[\cdot]$ denotes a data combination operation, and "firmware-upgrade" is one of the expected values of the reason field. The use of a recognition criterion involving two or more fields of the format makes it harder for an unauthorized party to guess how the recognition criterion is defined, and thus harder to apply reverse engineering to the signature-containing items 110*.

## Validation method

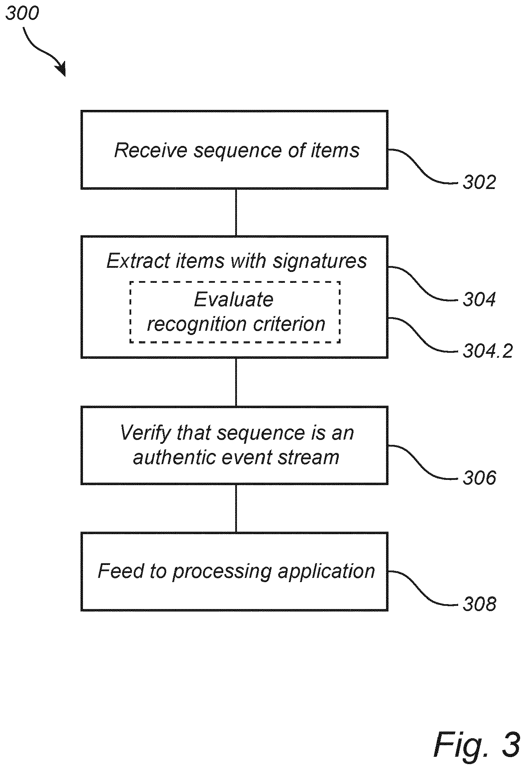

Turning now to figure 3, there will be described a method 300 of processing a signed event stream 100, which is an append-only sequence of immutable items. The input to the method 300 includes a sequence of items 110 compliant with a predefined format, wherein some items 110* contain digital signatures derived from other items 110. The method 300 maybe characterized as a recipient-side procedure. It is understood that a signed event stream may be provided by a single sender and read (or in other ways consumed) by multiple recipients.

On an implementation level, the method 300 may be executed by at least one processor or computer under the control of the same entity as will utilize the event-related data contained in the event stream by means of an event-processing application 420. Alternatively, the method 300 is executed by an entity that is specifically responsible for verifying the authenticity of the signed event stream and adapting it for use as input to the event-processing application 420. The device illustrated in figure 5 is suitable for executing the present method 300, and it maybe programmed to run the event-processing application 420 as well.

An initial step 302 of the method 300 is to receive a sequence of items 110. The items 110 shall be compliant with a predefined format, which includes the fields discussed above with reference to figure 1A. The sequence may be received from a communication party or from a memory, possibly in response to a request to retrieve (or load) the sequence from a storage location. It is noted that the method 300 verifies the authenticity of one chunk 120 at a time, so that execution may start before the full sequence is available. The execution proceeds chunk by chunk from the less recently obtained end 102 of the sequence towards the relatively more recently obtained end 104.

In a second step 304, such items 110* which contain digital signatures of chunks 120 are extracted from the sequence. If all chunks 120 contain an equal number of items 110, this extraction may be performed without inspecting the content of each item 110. This is also the case if all signature-containing items 110* have been appended after a certain position in the sequence, such that the recipient knows where to find them. If none of these conditions is fulfilled, the second step 304 may instead be executed while evaluating (substep 304.2) a predefined recognition criterion for the items 110. Reference is made to the above description and examples of suitable recognition criteria, including the presence of predefined values or value combinations in one or more pre-agreed fields other than the data field 118. The recipient's evaluation 304.2 of the recognition criteria may include testing whether the pre-agreed field contains the predefined value, whether multiple fields contain a predefined value combination, or whether the values of multiple fields provide a predefined result under a pre-agreed arithmetic operation.

In a third step 306 of the method 300, it is verified, using the digital signatures in the data fields 118 of the appended items 110*, that the sequence is an authentic event stream. The verification 306 may include a verification operation that involves, on the one hand, the (cryptographic) digital signature of a chunk 120 of the sequence, and a reconstructed super-hash, which has been computed by hashing a combination of reconstructed hashes of the items of the chunk 120.

Such a verification operation is schematically illustrated in figures 4A and 4B. In a first embodiment according to figure 4A, the verification operation is performed on a signed event stream of the type with partially overlapping chunks 120, as described above with reference to figure 1B. Initially, reconstructed hashes of the items 110 are computed using a hash function equivalent to the hash function h in use at the sender side. Because it may occur that the event stream when processed at the recipient side is unauthentic, this description uses different notation for the hashes computed at the recipient side and the sender side: $h016, h017, h018, ...$ and $\overline{h016}, \overline{h017}, \overline{h018}, ...$, respectively. Next, the reconstructed hashes are hashed to provide reconstructed super-hashes $\overline{H_1}, \overline{H2}$. The signature linking practiced at the sender side is respected when providing the reconstructed super-hashes, which means in this case that the super-hashes are computed from overlapping sets of item-wise hashes. The reconstructed super-hashes $\overline{H1}, \overline{H2}$ can be verified with respect to the corresponding digital signatures $s(H1), s(H2)$ and using a cryptographic element 410, which contains a public key of the same key pair as the sender's private key, and which is at the disposal of the recipient. As noted above, the public key can be embedded in the signed event stream as stream-level metadata or in a field of an item, or the recipient may have acquired the public key through different channels, such as by downloading it from the server or receiving it on a portable physical memory. A recipient wishing to determine all items 110 to which a digital signature corresponds may inspect a position identifier in the same appended item 110* as contains the digital signature. If the appended item 110* does not contain any position identifier, the recipient may apply a static rule or dynamic criterion which specifies how the sender has divided the sequence into chunks 120 and where the sender is supposed to insert the corresponding signature-containing items 110*.

The verification of the first reconstructed super-hash $\overline{H1}$ yields a binary result v1, which if true-valued justifies a conclusion that the items with global indices 016, 017, 018, 019 are authentic. Similarly, if an analogous verification of the second reconstructed super-hash $\overline{H2}$ yields a true binary result v2, it can be concluded that the items with global indices (019 and) 020, 021, 022, 023, 024 are authentic.

If any of the binary results v1, v2 is false, the corresponding items are to be considered unauthentic. As a consequence, the signed event stream 100 (or at least the portion from the less recent end 102 up to these chunks 120) shall be considered unauthentic as well.

Alternatively, if the data field 118 of the appended item 110* further stores the super-hash H1 as well ('document approach'), then the cryptographic element 410 may be utilized for verifying the digital signature s(H1) separately, after which a bitwise comparison of the reconstructed super-hash $\overline{H1}$ and the stored super-hash H1 is performed.

Figure 4B illustrates, according to a second embodiment, a verification of a signed event stream which was provided in accordance with figure 1C. Here, the appended signature-containing items 110* and the chunks 120 to which they refer are adjacent in the sequence. Apart from this difference, the verification of the signed event stream may proceed in an analogous manner to the first embodiment described with reference to figure 4A, including the computation of the reconstructed hashes and reconstructed super-hashes, and the use of a cryptographic element 410 with a public key of the same key pair as was used on the sender side.

If the verifying step 306 reveals that the event stream or a relevant portion thereof is authentic, the execution flow proceeds to a step 308 of feeding the sequence to an event-processing application 420. Preferably, the sequence is fed to the event-processing application 420 after the extracted items have been removed. This avoids, for example, a scenario where legacy software is confronted with unknown data structures in the form of the appended items 110*, so that the execution of the software is perturbed or fails. It is understood that, when the method 300 is performed in a running fashion, while receiving 302 the sequence gradually (e.g. as a live event stream) and possibly while feeding 308 the verified event stream gradually to the event-processing application 420, the "relevant portion" of the event stream may be the chunk 120 which is next to be fed. Alternatively, the "relevant portion" may extend from an initially received chunk up to the current chunk, which is equivalent to a statement that so far all chunks 120 of the sequence have been verified as authentic.

Some embodiments of the method 300 are suitable for processing a signed event stream that is associated with predefined models M0, M1, M2 of the technical products in which the events have occurred or are expected to occur. As explained above, each such model may for example include a plurality of state variables of the technical product, and it may be assumed that each item in the event stream exhaustively indicates all changes to the state variables that the corresponding event has caused. For example, if the event is a software upgrade, the change indicated in the corresponding item 110 may be to increment the current software version by one step, such as from 2.3 to 2.4; this allows the recipient to determine the new software version on the basis of the current software version. Alternatively, the item 110 may indicate the new software version explicitly, such as "2.4". As a further example, the event may be to install a new peripheral on a hardware product, whereby a set of new state variables of the mode, which describe the peripheral, are to be activated. The initial values of the newly activated state variables of the peripheral may be derivable from the model itself, with no need to indicate them explicitly in the item 110 that represents the installation event. The initial values of the newly activated state variables of the peripheral may possibly be dependent on other state variables relating to the hardware product itself or its history.

Preferably, the state-change indications in the item are exhaustive in the sense that no further information is needed in order to determine the technical product's new state - as captured by the state variables of the model - which will be the result of the event. Such exhaustiveness goes beyond the normal functionalities of a computer-implemented audit log (or audit trail, or audit record), where the main purpose is to document certain activities which have occurred, especially administrative, financial or legal activities, to be able to exonerate the persons or organizations involved. While audits log may be well suited for such non-technical purposes, it is generally speaking insufficient for the task of reliably determining a resulting state of an entity in which the documented activity has occurred.

In an envisioned use case, the event-processing application 420 is operable to reconstruct a current state of the technical product based on said predefined model together with the indicated changes to the state variables caused by the events corresponding to consecutive items 110 in the sequence. An event-processing application 420 with this ability may be of high value in device management or fleet management.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims.

**Claims**

1. A method (200) of providing a signed event stream (100), which is an append-only sequence of immutable items, the method comprising:

   obtaining (202) a sequence of items (110) where each item is compliant with a format that includes at least

   - a product field (114) for containing an identifier of a technical product in which an event has occurred,
   - a reason field for containing an identifier of a reason associated with the event,
   - an index field (112) for containing an index of the event, and
   - a data field (118);

   dividing (204) the sequence into chunks (120), wherein each chunk includes one or more items; and
   for each chunk, appending (206) an item (110*) compliant with the format, wherein the data field of the item contains a digital signature (s(H1), s(H2)) of the chunk, for thereby allowing verification that the sequence is an authentic event stream.

2. The method (200) of claim 1, wherein appending (206) the item (110*) to the sequence includes assigning (206.2), to at least one field of the item other than the data field (118), a value such that the item satisfies a predefined recognition criterion.

3. The method (200) of any of the preceding claims, wherein the digital signature (s(H1), s(H2)) of a chunk (120) is generated based on a super-hash (H1, H2) computed by hashing a combination of hashes (h016, h017, h018, ...) of the items (110) of the chunk.

4. The method (200) of any of the preceding claims, wherein:

   the event stream (100) is associated with a predefined model (M0, M1, M2) of each technical product (Dev_0, Dev_1, Dev_2) to which it relates, wherein the model includes a plurality of state variables of the technical product; and
   each item exhaustively indicates all changes to the state variables that the event has caused.

5. The method (200) of any of the preceding claims, which is executed during the obtention (202) of the sequence of items (110).

6. The method (200) of any of the preceding claims, further comprising:
   causing (208) the appended items (110*) to be signed by including them in subsequent chunks (120) of the sequence.

7. A method (300) of processing a signed event stream (100), which is an append-only sequence of immutable items, the method comprising:

   receiving (302) a sequence of items (no) where each item is compliant with a format that includes at least

   - a product field (114) for containing an identifier of a technical product () in which an event has occurred,
   - a reason field for containing an identifier of a reason associated with the event,
   - an index field (112) for containing an index of the event, and
   - a data field (118);

   extracting (304) items in which the data fields contain digital signatures (s(H1), s(H2)) of respective chunks (120) of the sequence;
   verifying (306), using the digital signatures, that the sequence is an authentic event stream; and
   feeding (308) the sequence without the extracted items to an event-processing application (420).

8. The method (300) of claim 7, wherein extracting (304) the items includes evaluating (304.2) a predefined recognition criterion for an item (110) based on at least one field of the item other than the data field (118).

9. The method (300) of claim 2 or 8, wherein the recognition criterion includes a predefined value or a predefined value range of the product field (114), of the reason field, or of an event-type field.

10. The method (300) of any of claims 2,8 and 9, wherein the recognition criterion includes a predefined combination of values of two or more fields of the item, or a predefined result of an arithmetic operation performed on two or more fields of the item.

11. The method (300) of any of the preceding claims, wherein at least one field of the appended items contains a position identifier of the chunk to which the digital signature (s(H1), s(H2)) relates.

12. The method (300) of any of the preceding claims, wherein the technical product (Dev_0, Dev_1, Dev_2) is a hardware product and/or an installed copy of a computer program product.

13. The method (300) of any of claims 7 to 12, wherein the authenticity of the event stream is verified (306) by a verification operation involving the digital signature (s(H1), s(H2) of a chunk (120) and a reconstructed a super-hash $(\overline{H1}, \overline{H2})$ computed by hashing a combination of reconstructed hashes $(\overline{h016}, \overline{h017}, \overline{h018}, ...)$ of the items (110) of the chunk.

14. The method (300) of any of the preceding claims, wherein the digital signature (s(H1), s(H2)) of a chunk (120) is linked to the digital signature of at least one other chunk.

15. The method (300) of any of claims 7 to 14, wherein:

the event stream (100) is associated with a predefined model (M0, M1, M2) of each technical product (Dev_0, Dev_1, Dev_2) to which it relates, wherein the model includes a plurality of state variables of the technical product; each item exhaustively indicates all changes to the state variables that the event has caused; and the event-processing application (420) is operable to reconstruct a current state of the technical product based on said predefined model together with the indicated changes to the state variables caused by the events corresponding to consecutive items (110) in the sequence.

16. A device (500) comprising processing circuitry (510) arranged to perform the method (200, 300) of any of claims 1 to 15.

17. A computer program (522) comprising instructions which, when the program is executed by a computer, cause the computer to carry out the method (200, 300) of any of claims 1 to 15.

**Amended claims in accordance with Rule 137(2) EPC.**

1. A method (200) of providing a signed event stream (100), which is an append-only sequence of immutable items, the method comprising:

obtaining (202) a sequence of items (110) where each item is compliant with a format that includes a set of fields, the set including at least

- a product field (114) for containing an identifier of a technical product in which an event has occurred,
- a reason field for containing an identifier of a reason associated with the event,
- an index field (112) for containing an index of the event, and
- a data field (118);

dividing (204) the sequence into chunks (120), wherein each chunk includes one or more items; and for each chunk, appending (206) an item (110*) compliant with the format, wherein the item is instantiated while assigning values to the set of fields of the format, in order that the data field of the item contains a digital signature (s(H1), s(H2)) of the chunk, for thereby allowing verification that the sequence is an authentic event stream, and that at least one field other than the data field contains a value such that the item satisfies a predefined recognition criterion, **characterized in that** the recognition criterion includes a predefined combination of values of two or more fields of the item, or a predefined result of an arithmetic operation performed on two or more fields of the item.

2. The method (200) of claim 1, wherein the digital signature (s(H1), s(H2)) of a chunk (120) is generated based on a super-hash (H1, H2) computed by hashing a combination of hashes (ho16, h017, h018, ...) of the items (110) of the chunk.

3. The method (200) of any of the preceding claims, wherein:

the event stream (100) is associated with a predefined model (M0, M1, M2) of each technical product (Dev_o, Dev_1, Dev_2) to which it relates, wherein the model includes a plurality of state variables of the technical product; and
each item exhaustively indicates all changes to the state variables that the event has caused.

4. The method (200) of any of the preceding claims, which is executed during the obtention (202) of the sequence of items (110).

5. The method (200) of any of the preceding claims, further comprising:
causing (208) the appended items (110*) to be signed by including them in subsequent chunks (120) of the sequence.

6. A method (300) of processing a signed event stream (100), which is an append-only sequence of immutable items, the method comprising:

receiving (302) a sequence of items (110) where each item is compliant with a format that includes a set of fields, the set including at least

- a product field (114) for containing an identifier of a technical product in which an event has occurred,
- a reason field for containing an identifier of a reason associated with the event,
- an index field (112) for containing an index of the event, and
- a data field (118);

extracting (304) items in which the data fields contain digital signatures (s(H1), s(H2)) of respective chunks (120) of the sequence, which includes evaluating (304.2) a predefined recognition criterion for an item (110) based on at least one field of the item other than the data field;
verifying (306), using the digital signatures, that the sequence is an authentic event stream; and
feeding (308) the sequence without the extracted items to an event-processing application (420),
**characterized in that** the recognition criterion includes a predefined combination of values of two or more fields of the item, or a predefined result of an arithmetic operation performed on two or more fields of the item.

7. The method (300) of any of the preceding claims, wherein at least one field of the appended items contains a position identifier of the chunk to which the digital signature (s(H1), s(H2)) relates.

8. The method (300) of any of the preceding claims, wherein the technical product (Dev_o, Dev_1, Dev_2) is a hardware product and/or an installed copy of a computer program product.

9. The method (300) of any of claims 6 to 8, wherein the authenticity of the event stream is verified (306) by a verification operation involving the digital signature (s(H1), s(H2) of a chunk (120) and a reconstructed super-hash $(\overline{H1}, \overline{H2})$ computed by hashing a combination of reconstructed hashes $(\overline{h016}, \overline{h017}, \overline{h018}, ...)$ of the items (110) of the chunk.

10. The method (300) of any of the preceding claims, wherein the digital signature (s(H1), s(H2)) of a chunk (120) is linked to the digital signature of at least one other chunk.

11. The method (300) of any of claims 6 to 10, wherein:

the event stream (100) is associated with a predefined model (M0, M1, M2) of each technical product (Dev_o, Dev_1, Dev_2) to which it relates, wherein the model includes a plurality of state variables of the technical product;
each item exhaustively indicates all changes to the state variables that the event has caused; and
the event-processing application (420) is operable to reconstruct a current state of the technical product based on said predefined model together with the indicated changes to the state variables caused by the events corresponding to consecutive items (110) in the sequence.

12. A device (500) comprising processing circuitry (510) arranged to perform the method (200, 300) of any of claims 1 to 11.

13. A computer program (522) comprising instructions which, when the program is executed by a computer, cause the computer to carry out the method (200, 300) of any of claims 1 to 11.

EP 4 550 354 A1

Fig. 1A

Fig. 1B

EP 4 550 354 A1

100

120

120

110  110  110  110  110*  110  110  110  110  110*

| 016 | 017 | 018 | 019 | 020 | 021 | 022 | 023 | 024 | 025 |

112
114
116
118

s(H1)

s(H2)

$h$  $h$  $h$  $h$  $h$  $h$  $h$  $h$  $h$

$h_{016}$  $h_{017}$  $h_{018}$  $h_{019}$  $h_{020}$  $h_{021}$  $h_{022}$  $h_{023}$  $h_{024}$

$h$

$h$

H1

H2

*Fig. 1C*

*200*

Obtain sequence of items — *202*

Divide into chunks — *204*

Append items with signatures — *206*

Make recognizable — *206.2*

Sign appended items — *208*

*Fig. 2*

*300*

Receive sequence of items — 302

Extract items with signatures — 304

Evaluate
recognition criterion — 304.2

Verify that sequence is an
authentic event stream — 306

Feed to processing application — 308

*Fig. 3*

Fig. 4A

Fig. 4B

Fig. 5

Europäisches
Patentamt

European
Patent Office

Office européen
des brevets

# EUROPEAN SEARCH REPORT

Application Number

EP 23 20 7270

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/258146 A1 (CASTELLUCCI RYAN [US] ET AL) 19 August 2021 (2021-08-19) * paragraphs [0080] - [0085], [0108] - [0111], [0119]; figures 2, 3, 5, 6 * | 1-17 | INV.<br>G16Y40/40<br>G06Q10/08<br>G06Q10/20<br>G06Q10/30 |
| X | US 2021/328808 A1 (SAKAZAKI HISAO [JP] ET AL) 21 October 2021 (2021-10-21) * pages 9-11; figures 1,3 * | 1-17 | H04L9/32<br>H04L9/00 |
| X | WO 2019/050760 A1 (PEERNOVA INC [US]) 14 March 2019 (2019-03-14)<br><br>* paragraphs [0053] - [0054]; figures 3A, 3C * | 1,3-5,7,<br>12,13,<br>15-17 | |

TECHNICAL FIELDS
SEARCHED (IPC)

G16Y
G06Q
H04L

The present search report has been drawn up for all claims

| Place of search | Date of completion of the search | Examiner |
|---|---|---|
| Munich | 29 March 2024 | Manet, Pascal |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

**EP 23 20 7270**

This annex lists the patent family members relating to the patent documents cited in the above-mentioned European search report.
The members are as contained in the European Patent Office EDP file on
The European Patent Office is in no way liable for these particulars which are merely given for the purpose of information.

**29-03-2024**

| Patent document cited in search report | | | Publication date | Patent family member(s) | | | Publication date |
|---|---|---|---|---|---|---|---|
| US 2021258146 | A1 | | 19-08-2021 | EP | 2897051 | A2 | 22-07-2015 |
| | | | | EP | 3255549 | A1 | 13-12-2017 |
| | | | | EP | 3511833 | A1 | 17-07-2019 |
| | | | | US | 2015188715 | A1 | 02-07-2015 |
| | | | | US | 2016254906 | A1 | 01-09-2016 |
| | | | | US | 2018302216 | A1 | 18-10-2018 |
| | | | | US | 2021258146 | A1 | 19-08-2021 |
| US 2021328808 | A1 | | 21-10-2021 | EP | 3901801 | A1 | 27-10-2021 |
| | | | | JP | 2021175016 | A | 01-11-2021 |
| | | | | US | 2021328808 | A1 | 21-10-2021 |
| WO 2019050760 | A1 | | 14-03-2019 | US | 2019074974 | A1 | 07-03-2019 |
| | | | | WO | 2019050760 | A1 | 14-03-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20230140623 A1